Europäisches Patentamt

European Patent Office

Office européen des brevets

(11) Publication number: **0 345 886 B1**

## EUROPEAN PATENT SPECIFICATION

(45) Date of publication of patent specification: **20.10.93**   (51) Int. Cl.⁵: **A23L  1/05**, A23L 1/314

(21) Application number: **89201418.4**

(22) Date of filing: **05.06.89**

The file contains technical information submitted
after the application was filed and not included in
this specification

(54) **Alginate gels.**

(30) Priority: **10.06.88 GB 8813773**

(43) Date of publication of application:
**13.12.89 Bulletin  89/50**

(45) Publication of the grant of the patent:
**20.10.93 Bulletin  93/42**

(84) Designated Contracting States:
**AT CH DE ES FR GB IT LI NL SE**

(56) References cited:
**FR-A- 2 462 105          GB-A- 1 254 562
US-A- 1 827 991          US-A- 2 809 893
US-A- 3 480 450          US-A- 4 603 054**

(73) Proprietor: **KELCO INTERNATIONAL LIMITED
Westminster Tower
3 Albert Embankment
London SE1 7RZ(GB)**

(72) Inventor: **Bennett, Alexander N.
11 Hutchins Way
Horley Surrey(GB)**

(74) Representative: **Cole, William Gwyn
European Patent Department,
Merck & Co., Inc.,
Terlings Park,
Eastwick Road
Harlow, Essex CM20 2OR (GB)**

Rank Xerox (UK) Business Services
(3. 10/3.6/3.3. 1)

**Description**

BACKGROUND OF THE INVENTION

U.S. Patent 2441720 and 2918375 (Kelco Company) describes a method of making calcium alginate gels where a soluble alginate (usually the sodium or potassium salt) is reacted with sparingly soluble calcium salts (such as tricalcium phosphate, calcium tartrate). In these systems, the calcium from the sparingly soluble calcium salt is released by acid or acid formers. The rate of reaction of the soluble calcium with the soluble alginate to form a calcium alginate gel is controlled by a gel-retarding or gel-inhibiting salt such as sodium hexametaphosphate.

U.S. Patent 3060032 (General Foods Corporation) uses the formation of a calcium alginate gel to improve freeze thaw stability in frozen dessert gels. The calcium alginate gel is formed from sodium alginate, calcium tartrate and sodium hexametaphosphate. The rate of reaction of the calcium released from the calcium tartrate, with the sodium alginate is controlled by the sodium hexametaphosphate.

U.S. Patent 3352688 (Kelco Company) describes the use of calcium alginate gels in a bake stable bakery filling. The gel system essentially consists of sodium alginate, dicalcium phosphate, and sodium hexametaphosphate. The reaction control is similar to that used in U.S. Patent 3060032 above.

U.S. Patent 3770462 (Kelco Company) describes the use of sodium phosphoalginate with calcium sulphate dihydrate to produce calcium alginate gel milk custard type pudding. In this case the alginate and calcium sequestrant are intimately mixed during the production of the sodium phosphoalginate from alginic acid. This enables the alginate to be hydrated in cold milk because the milk calcium is sequestered by the phosphate present in the alginate. The calcium released by the calcium sulphate dihydrate reacts with the soluble alginate to produce a homogenous calcium alginate gel.

US patent 2809893 describes a dry powdered mixture for forming gels for use in desserts. Such gels contain sugar, algin, sodium hexametaphosphate, sodium citrate, citric acid, heat treated anhydrous monocalcium phosphate and various flavourings and colourings.

US patent 1827991 describes a jelly preparation containing pectin, sugar and an edible active coated acid, such as a fat coated citric acid.

US patent 4603054 describes a process for making a structured meat product which includes blending the meat with a powdered mixture of alginate powders and calcium salt powder comprising salts of calcium which are either insoluble or slightly soluble in water.

In all the above examples, a sparingly soluble calcium salt is used because a soluble calcium salt reacts with the alginate in an uncontrolled way and will precipitate the alginate as fibrous calcium alginate. The other feature is that a chemical sequestrant is essential in order to control the rate of reaction of the calcium with the alginate even with sparingly soluble calcium salts.

It would be preferable to produce a food product having a gel binding system without the presence of a chemical sequestrant.

SUMMARY OF THE INVENTION

It has now been found that the rate of release of calcium into a soluble alginate solution can be controlled by using encapsulated calcium salts.

Normally soluble calcium salts cannot be used with sodium alginate solutions because the interaction is too rapid and leads to precipitation of fibrous calcium alginate. Encapsulating the soluble calcium salt gives the desired dispersibility and controlled release of calcium into the food product containing the soluble alginate and obviates the need for a calcium sequestrant.

One particular application of the calcium alginate gels of this invention is in the formation of structured meat products.

DETAILED DESCRIPTION

U.S. Patent 4,603,054 (Schmidt et al.) describes a process for preparing algin/calcium gel structured meat products. In the Schmidt et al. process comminuted meat particles are mixed with 0.5 to 2.0 percent alginate powder and 0.1 to 0.5 percent calcium salt powder, formed into a desired shape, and stored until the resulting gel is strong enough to form a structured meat product. The calcium salts are described as being insoluble or slightly soluble in water, e.g., the readily soluble salt calcium chloride is described as causing too rapid gelation. The gelation step is described as taking 1-4 days. In order to produce gelation even in 1-4 days, optional solubilising ingredients such as glucono-delta-lactone, lactic acid, citric acid, and phosphoric acid are recommended. The present invention enables much shorter gelling times to be achieved. In the commercial application of the Schmidt et al process, the calcium source is the sparingly soluble salt, calcium carbonate and the acid source is the encapsulated lactic acid product CAP-SURE(TM)-LCL-135-50 (Balchem Corp.). This latter product contains approximately 28%±2% lactic acid and 21±2% as calcium lactate, which acts as a carrier for the lactic acid. The level of calcium lactate in this encapsulated form is insufficient to form a calcium alginate gel.

Accordingly the present invention provides a meat product blend comprising a comminuted or powdered meat product; 0.2 to 2% by weight of a soluble alginate salt; and one or more encapsulated calcium salts, sufficient to form a calcium alginate gel.

The soluble alginate salts which may be used include, for example, the alginate of ammonium, magnesium, potassium, sodium or other alkali metal. The soluble alginates may be prepared by well known methods such as disclosed in U.S. Patents: 1814981, Thornley and Walsh; 2036922, Clark and Green; 2036934, Green; and 2128551, Le Gloahec. The alginate may be made from seaweed types high in guluronic acid, commonly known as high "G" alginate. Alternatively the alginate may be produced from seaweed types high in manuronic acid, known as high "M" alginate. The alginate can be a blend of these two types in any proportion.

The calcium salts used are any calcium salts approved for use in foods and include calcium lactate, preferably as the pentahydrate, or tetrahydrate and calcium chloride, preferably as the dihydrate. Other suitable calcium salts include the acetate, gluconate, glycerophosphate, malate and sulphate. The salts are encapsulated with a fat derivative which may include fatty acids, monoglycerides and/or diglycerides of fatty acids and also preferably including a hardened vegetable oil. A surfactant may also be included to allow break-down of the encapsulating oil and consequent release of the calcium salt at relatively low temperatures within a short period of time. For ease of encapsulation and, later, release of cations, it is preferred that the calcium salts have a particle size diameter in the range of 50-550 $\mu$m (microns), and preferably in the range of 125-420 $\mu$m (microns). The percent, by weight, of encapsulating material can range from about 10-70%, i.e., approximately 30-90% by weight of the encapsulated material is calcium salt.

One advantage of this invention is that it is possible to employ calcium salts which are more soluble than those commonly used to produce calcium alginate gels. For example, the solubilities of calcium salts in current use are:-

|  | Solubility g/100cc Cold Water |
|---|---|
| Calcium Sulphate Dihydrate | 0.241 |
| Calcium Hydrogen Orthophosphate Dihydrate | 0.0316 |

The above salts may be employed in the present invention. However, further calcium salts which could not be employed by prior art processes, but which can be used in this invention are the more soluble calcium salts illustrated by the following solubilities:

|  | Solubility g/100cc Cold Water |
|---|---|
| Calcium Chloride Dihydrate | 97.7 |
| Calcium Lactate Pentahydrate | 3.1 |
| Calcium Acetate | 37.4 |
| Calcium Malate | 2.89 |
| Calcium Gluconate | 3.3 |
| Calcium Glycerophosphate | 2.0 |

Selection of the required proportion of calcium salt and the type and quantity of encapsulating material can be used to determine the rate of release of the calcium.

The soluble calcium salts are encapsulated in fat derivatives and hardened vegetable oils which, after dispersion, will release the calcium to form a stable calcium alginate gel. This release is such that it obviates the need for calcium sequestrants.

In many applications where calcium alginate gels are formed it is highly desirable to have a relatively short gel setting time. For these applications the encapsulate includes an additional surfactant to enhance its breakdown even at cold (about 4 degrees centigrade) temperatures.

However when longer gel setting times (i.e. up to 18 hours) are required little or no surfactant is used in the encapsulating material. Breakdown of the coating is thereby retarded allowing a longer time before the formation of the calcium alginate gel.

Suitable coatings comprise up to 100% of one or more water-soluble glycerides or up to 100% of one or more hydrogenated vegetable oils, or any mixture thereof. The encapsulate may comprise for example a fat or a fat derivative selected from a group consisting of fatty acids having from 12 to 22 carbon atoms, monoglycerides, diglycerides, or triglycerdies of fatty acids having from 12 to 22 carbon atoms and mixtures thereof. It has been found that the rate of release of the encapsulated calcium salt and hence the rate of calcium alginate gel formation can be increased by including in the encapsulating coating a surfactant. The presence of the surfactant makes release possible from temperatures of approximately 4 degrees centigrade.

The encapsulate allowing faster release of the active ingredient uses fat and fat derivatives as described above in the proportions 90 to 99.5% and includes a surfactant from 0.5 to 10%. This type of coating having a hydrophilic/lipophilic balance from 3.5 to 10.

Suitable coatings employed in the present invention comprise mixtures of about 50-70 wt.% of one or more water soluble glycerides and about 30-50 wt. % of one or more hydrogenated vegetable oils. Preferably, the mixture comprises about 60 wt. % percent of one or more water soluble glycerides and about 40 wt. % of one or more hydrogenated vegetable oils.

Useful water soluble glycerides include oxidatively stable mono- and diglycerides having film-forming properties and oxygen and moisture barrier properties. Preferably these glycerides are of edible quality for culinary purposes. Examples of suitable water soluble edible glycerides include distilled acetylated monoglycerides sold by Eastman Chemical Products, Inc., Kingsport, TN, under the trademark MYVACET™; and mono- and diglyceride mixtures sold by Durkee Industrial Foods division of SCM Corporation, New York, NY, under the trade names DUR-EM™ and DUR-LO™. In addition, mixtures of distilled monoglycerides and hydrogenated vegetable oils sold by Eastman Chemical Products, Inc., under the trademark MYVATEX™ may also be used as long as the glyceride/hydrogenated vegetable oil contents are within the above mentioned ranges. A particular preferred water soluble glyceride is the DUR-EM™ 207E product, a mixture of mono- and diglycerides containing at least 50% monoglycerdies having a maximum iodine value (IV) of 5 (centigrams/gram of fat) and a capillary melting point in the range of 140°-146°F (60-63.3°C).

Suitable hydrogenated vegetable oils include triglycerides such as hydrogenated cottonseed, corn, peanut, soybean, palm, palm kernel, babassu, sunflower and safflower oils. Preferred hydrogenated vegetable oils include hydrogenated palm oil, cottonseed oil and soybean oil sold by Durkee Industrial Foods division of SCM Corporation under the trademarks DURKEE™ 07, 17, 27; DURATEX™, DAORICH™, KLX™ and ARATEX™. A particularly preferred hydrogenated vegetable oil is the DURKEE™ 27 product, a hydrogenated palm oil, marketed in bead form and having a melting point in the range of about 136°-144°F (57.8-62.2°C). These coatings are described in Weiss et al, U.S. Patent 4,772,477.

The method of applying the coating to the substrate is not critical, forms no part of the present invention and may be performed in any number of known manners. For instance, the substrate particles may be suspended in the liquid coating and the suspension sprayed into a "freezing chamber". Alternatively, the particles may be sprayed with the coatings of the present invention, the particles being suspended by a flow of air (fluidized bed). U.S. Patent Nos. 4,511,584 at columns 3-5 and 4,511,592 at column 4, teach preferred methods of applying fat coatings to granular acidulants. U.S. Patents Nos. 4,537,784 at columns 3-4; 4,497,845 at column 4; 3,819,838; 3,341,466; 3,279,994; 3,159,874; 3,110,626; 3,015,128; 2,799,241; and 2,648,609, teach additional methods and apparatus for applying coatings which may be used to produce the coated salts used in the present invention.

According to the invention, the food product is a meat product, so that the resulting gelled system provides a structured meat product.

For meat products, both the alginate and calcium salts are used in the dry state. The alginates used for meat products are any fine mesh, soluble high "G" alginates, particularly sodium or potassium alginate, milled so that at least 75% pass through a 75 μm (micron) sieve.

The preferred alginates for meat products are milled so that at least 90% pass through a 106 μm (micron)sieve, at least 95% pass through a 150 μm (micron) sieve, and at least 98% pass through a 250 μm (micron) sieve. Commercially available alginates that can be milled to these sizes include Protan's Protanal SF and HF range of alginates, Protanal EVRF 200 potassium alginate, CECA's Satialgine, Duckloid's Duckalgin NSP range of alginates and Kelco International's range of Manugel alginates, especially Manugel A7B609, DJX, DMB, DPB and DLB.

The texture of the structured meat products depends on the strength of the alginate gel formed in the product. The gel is formed by the interaction of the calcium ion with the soluble alginate. Typically, sufficient calcium salt is added to give from about 30% to over 100% conversion to calcium alginate. The preferred range in this invention is for the final gel to contain around 80% of the sodium alginate converted to calcium alginate. The table below gives guidelines for the quantities of calcium salts to be used with the indicated levels of sodium alginate. The calculation is based on the equivalent weight for alginic acid of 194. The amount of calcium salt used is that which converts 80% of the soluble alginate to the calcium form thereof. Based on an equivalent weight for alginic acid of 194, the actual amount of weight of calcium salt can be calculated. In terms of percentages, the following table can be used to determine percentage of calcium salt for a given amount of sodium alginate.

TABLE 1

| ALGINATE VS. CALCIUM CONCENTRATION | | |
|---|---|---|
| Salt | % Ca$^{2+}$ Salt | |
| | 0.2%* | 2.0%* |
| Ca Lactate.5H$_2$0 | 0.11 | 1.10 |
| CaCl$_2$ (anhyd.) | 0.041 | 0.41 |
| CaCl$_2$.2H$_2$O | 0.054 | 0.54 |
| * % Dry NaAlginate | | |

A first embodiment of this invention is to provide a meat blend comprising comminuted meat; 0.2-2.0% by weight of a soluble alginate salt; and one or more encapsulated calcium salts containing sufficient calcium to convert 80% of the soluble alginate to calcium alginate gel.

Another embodiment of this invention is a process for preparing structured meat products which comprises:

a) comminuting meat to a desired size;

b) mixing therewith for 2-6 minutes 0.2-2.0% by weight a soluble alginate salt and encapsulated calcium salt in an amount sufficient to form a calcium alginate gel; and

c) forming said mixed meat into a desired shape and storing said shaped meat for up to 18 hours to allow it to form a structured meat product.

Another embodiment of this invention is a structured meat product produced by the above process.

As used herein, meat is intended to include mammalian, avian and piscene meats. Especially useful in this invention is beef, lamb, veal, pork, chicken, fowl, turkey and fish.

The invention is also intended to include meat products which contain other optional ingredients known to those skilled in the meat packing and processing arts. Such ingredients include, inter alia, antioxidants, preservatives, flavouring agents and spices, antimicrobial agents, water and colouring agents.

Depending on the desired appearance of the end product, the untreated meat can be comminuted to particle sizes ranging from 2 to 60 mm, typically by mincing, grinding or flaking the meat. Alternatively, with softer meats, such as chicken and turkey, whole muscles may be used and broken down by the mixer.

In a typical formulation, lean beef trimmings are passed through 15 mm x 35 mm kidney shape holes in a mincing plate. About 15% to 100% of this product is then fine minced through 5 mm holes in a mincing plate. Typically, fine mince meat is prepared from high fat portions of the carcase, such as the flank. The minced meat portions are then placed in a suitable mixer such as a paddle mixer and the two powders added thereto, preferably simultaneously. The comminuted meat, alginate and calcium salt are thoroughly mixed for about 2-6 minutes. After mixing the meat can be shaped or further processed as by stuffing into casing. Optional ingredients may be added at any time during mixing, depending on their specific purpose, providing that they do not interfere with the alginate gelling reaction. Examples of ingredients which may interfere include sodium chloride, phosphates and acidic products.

The invention is further defined by reference to the following examples, which are intended to be illustrative.

EXAMPLE 1

| Formulation | % by weight |
|---|---|
| Fine mesh sodium alginate | 0.4 |
| Encapsulated calcium lactate | 0.4 |
| Beef | 99.2 |
| | 100.0 |

The beef consists of a coarsely minced fraction of 90% visual lean forequarter chuck and blade comminuted by grinding through a mincing plate with 15 mm x 35 mm kidney shaped holes, and a finely minced fraction of beef flank comminuted by grinding through a mincing plate with 5 mm circular holes. The ratio of coarse to fine minced beef is 80% to 20%.

The meat is slowly mixed in a Stalberk mixer and the sodium alginate (Manugel A7B609) and encapsulated calcium lactate (CaL-135E-75), Balchem Corporation, NY. USA) dusted over the meat and mixed for four minutes. When mixing is complete the mix is divided into two portions. One portion is transferred to a vacuum stuffing machine and formed into steak-shaped logs. The other portion is stuffed into sausage casings. Both portions are then stored at 5 degrees C until a firm gel is formed. This takes approximately 6 hours. Steak-shaped pieces are sliced from the steak-shaped log. The product stuffed into casing is cut into portions suitable for roasting joints. Samples of both the steak-shaped pieces are used as fresh refrigerated products (5 degrees centigrade). Further portions of the vacuum packaged products are frozen. Further portions of the samples are controlled atmosphere packaged in 75% oxygen and 25% carbon dioxide and are used as fresh product. Fresh and frozen steak-shaped slices are cooked by frying. These slices are also cooked by grilling. Fresh and frozen roasting joint-shaped pieces are baked in an oven until an interal temperature of 70-80 degrees centigrade is achieved. Other samples of these joints are cooked in by microwave.

EXAMPLE 2

| Formulation | % by weight |
|---|---|
| Fine mesh sodium alginate | 0.4 |
| Encapsulated calcium lactate | 0.4 |
| Beef | 99.2 |
| | 100.0 |

The beef source and mincing procedures are the same as described in example 1.

The sodium alginate and calcium salt are added separately. The sodium alginate (Manugel A7B609) is added by dusting over the meat while mixing for 3 minutes. After 3 minutes the encapsulated calcium lactate (CaL-135E-75, Balchem Corporation, NY, USA.) is added to the mixer while mixing for a further minute.

The packaging and cooking procedures are as described in example 1.

EXAMPLE 3

| Formulation | % by weight |
|---|---|
| Fine mesh sodium alginate | 2.0 |
| Encapsulated calcium lactate | 0.6 |
| Beef | 97.4 |
| | 100.0 |

The beef, process procedures, packaging, and cooking are as in Example 1, except that the gel takes 15 minutes to form.

6

EXAMPLE 4

| Formulation | % by weight |
|---|---|
| Fine mesh sodium alginate | 0.2 |
| Encapsulated calcium lactate | 0.3 |
| Beef | 99.5 |
| | 100.0 |

The beef, process procedures, packaging, and cooking are as described Example 1, except that the gel takes 18 hours to form.

EXAMPLE 5

| Formulation | % by weight |
|---|---|
| Fine mesh sodium alginate | 0.4 |
| Encapsulated calcium lactate | 0.4 |
| Beef | 99.2 |
| | 100.0 |

The beef comprises a finely minced beef comminuted by grinding through a mincing plate with 5 mm circular holes.

The process procedures, packaging, and cooking are as described in Example 1, the gel taking 6 hours to form.

EXAMPLE 6

| Formulation | % by weight |
|---|---|
| Fine mesh sodium alginate | 0.4 |
| Encapsulated calcium lactate | 0.4 |
| Lamb | 99.2 |
| | 100.0 |

The lamb consists of a coarsely minced fraction of trimmed lamb shoulder or deboned leg comminuted by grinding through a mincing plate with 15 mm x 35 mm kidney shaped holes, and a finely minced fraction of lamb breast comminuted by grinding through a mincing plate with 5 mm circular holes. The ratio of coarse to fine minced lamb is 80% to 20%.

The process procedures, packaging, and cooking are as described in Example 1, the gel taking 6 hours to form.

EXAMPLE 7

| Formulation | % by weight |
|---|---|
| Fine mesh sodium alginate | 0.4 |
| Encapsulated calcium lactate | 0.4 |
| Pork | 99.2 |
| | 100.0 |

EP 0 345 886 B1

The pork consists of a coarsely minced fraction of trimmed pork shoulder or deboned leg comminuted by grinding through a mincing plate with 15 mm x 35 mm kidney shaped holes, and a finely minced fraction of pork belly comminuted by grinding through a mincing plate with 5 mm circular holes. The ratio of coarse to fine minced pork is 80% to 20%.

The process procedures, packaging, and cooking are as described Example 1, the gel taking 6 hours to form.

EXAMPLE 8

| Formulation | % by weight |
|---|---|
| Fine mesh sodium alginate | 0.4 |
| Encapsulated calcium lactate | 0.4 |
| Chicken | 99.2 |
| | 100.0 |

The chicken consists of a coarsely minced fraction of chicken breast meat comminuted by grinding through a mincing plate with 15 mm x 35 mm kidney shaped holes, and a finely minced fraction of chicken thigh meat comminuted by grinding through a mincing plate with 5 mm circular holes. The ratio of coarse to fine minced chicken is 80% to 20%.

The process procedures, packaging, and cooking are as described in Example 1, except that the gel takes 18 hours to form.

EXAMPLE 9

| Formulation | % by weight |
|---|---|
| Fine mesh sodium alginate | 0.4 |
| Encapsulated calcium lactate | 0.4 |
| Chicken | 99.2 |
| | 100.0 |

The chicken consists of chicken breast meat comminuted into smaller pieces by the action of the mixer.

The process procedures, packaging, and cooking are as described in Example 1, except that the gel takes 18 hours to form.

EXAMPLE 10

| Formulation | % by weight |
|---|---|
| Fine mesh sodium alginate | 0.4 |
| Encapsulated calcium lactate | 0.4 |
| Chicken | 99.2 |
| | 100.0 |

The chicken consists of chicken breast meat comminuted by grinding through a mincing plate with 15mm x 35 mm kidney shaped holes.

The process procedures, packaging, and cooking are as described in Example 1, except that the gel takes 18 hours to form.

8

EXAMPLE 11

| Formulation | % by weight |
|---|---|
| Fine mesh sodium alginate | 0.4 |
| Encapsulated calcium lactate | 0.4 |
| Turkey | 99.2 |
| | 100.0 |

The turkey consists of a coarsely minced fraction of the major turkey breast muscle comminuted by grinding through a mincing plate with 15 mm x 35 mm kidney shaped holes, and a finely minced fraction of the minor turkey breast muscle comminuted by grinding through a mincing plate with 5 mm circular holes. The ratio of coarse to fine minced turkey is 80% to 20%.

The process procedures, packaging, and cooking are as described in Example 1, except that the gel takes 18 hours to form.

EXAMPLE 12

| Formulation | % by weight |
|---|---|
| Fine mesh sodium alginate | 0.4 |
| Encapsulated calcium lactate | 0.4 |
| Veal | 99.2 |
| | 100.0 |

The veal consists of a coarsely minced veal comminuted by grinding through a mincing plate with 15 mm x 35 mm kidney shaped holes.

The process procedures, packaging, and cooking are as described in Example 1, the gel taking 6 hours to form.

EXAMPLE 13

| Formulation | % by weight |
|---|---|
| Fine mesh sodium alginate | 0.4 |
| Encapsulated calcium lactate | 0.6 |
| Beef | 99.0 |
| | 100.0 |

The beef is as described in example 1.

The meat is slowly mixed in a Stalberk mixer and the sodium alginate (Manugel A7B609) and encapsulated calcium lactate (CaL-135-50, Balchem Corporation, NY. USA) dusted over the meat and mixed for four minutes. When mixing is complete the mix is divided into two portions. One portion is transferred to a vacuum stuffing machine and formed into steak shaped logs. The other portion is stuffed into sausage casings. Both portions are then stored for 18 hours at 5 degrees C until a firm gel is formed. The packaging and cooking are as described in example 1.

EXAMPLE 14

| Formulation | % by weight |
|---|---|
| Fine mesh sodium alginate | 0.4 |
| Encapsulated calcium lactate | 0.4 |
| Chicken | 99.2 |
| | 100.0 |

The chicken consists of chicken breast meat comminuted by grinding through a mincing plate with 10mm holes.

The process procedures are as described in example 1.

The mix is stuffed into casing and allowed to form a firm gel. This takes approximately 18 hours. The gelled product is diced into cubes of 20mm cube. Approximately 150g of the cubes are placed into a can with approximately 300ml of a white vine and vegetable gravy to completely fill the can. The can is sealed and retorted at $103.35 \times 10^3$Pa (15psi) for 30 minutes. The can and its contents are cooled to room temperature.

Example 15

Pet Food Chunks.

This system will produce pet food chunks which are include in canned pet food and are stable to the retorting conditions used to cook the product in the can.

## Ingredients

### Part 1

|  |  |
|---|---|
| | % |
| Sodium alginate | 1.00 |
| Gaur Gum | 1.00 |
| Water | 45.90 |

### Part 2

|  |  |
|---|---|
| Raw Minced Meat | 50.00 |

### Part 3

|  |  |
|---|---|
| Encapsulated calcium lactate | 2.10 |
| | 100.00 |

## Preparation.

### Part 1

The sodium alginate (Manugel GMB, Kelco International Ltd, London) and the guar gum (Supercol U, Meyhall Chemicals Ltd., Merseyside, England) are dry mixed together.
The dry mix is added to the water and dissolved using a high shear Silverson mixer.

The raw minced meat from part 2 is blended into the solution from part 1.

The encapsulated calcium lactate (CaL-135E-85, Balchem Corporation, NY, USA) is added and thoroughly mixed in.

The mix is extruded through 20mm diamater holes and cut intremittantly with a blade wetted with 5% wt/wt calcium chloride solution.

The chunks are set aside for 30 minutes until a firm gel is formed internally.

The firmly gelled chunks are used as required as part of the meat for canning.

EXAMPLE 16

Structured Cooked Meat

|  | % |
|---|---|
| Fine Mesh Sodium Alginate | 0.4 - 0.8* |
| Encapsulated Calcium Lactate | 0.3 - 0.6* |
| Cooked Meat | 50.0 - 99.3 |
| water | 0.0 - 49.3 |

* Percentage based on the weight of meat or meat plus water.

The cooked meat consists of beef, pork, lamb, chicken, turkey, veal, venison, fish, or any mixture thereof.
The cooked meat is broken down to the correct size by the normal machinery used in the meat industry.

11

The cooked meat and water, if used, are slowly mixed and the sodium alginate dusted over the surface. Mixing is continued for 3-5 minutes. The encapsulated calcium lactate (CaL-135E-75) is added to the mixer and blending continued for 1-2 minutes.

The product is stuffed into casings or formed into a suitable shape, and allowed to form a firm gel structure by storing at about 5°C for 6-18 hours.

EXAMPLE 17

Structured Cooked Beef

|  | % |
| --- | --- |
| Cooked Beef | 69.0 |
| Water | 30.0 |
| Fine Mesh Sodium Alginate | 0.6* |
| Encapsulated Calcium Lactate | 0.4* |

* Percentage based on weight of beef plus water.

The beef was cooked by boiling in water for 30 minutes and the water/fat drained off and discarded. The beef was cooled to 5°C and placed in a mixer with mixing action sufficient to break the beef into smaller particles.

Water was added to the beef and mixed for 1-2 minutes.

Sodium alginate (Manugel A7B609) was sprinkled over the beef/water and mixed for 3-4 minutes Encapsulated calcium lactate (CaL-135E-75) was sprinkled over the mix and blended in for 1-2 minutes.

The mix was then packaged by stuffing into casing and a firm gel allowed to form by storage overnight at 5°C.

The gelled product can be served hot or cold as required.

EXAMPLE 18

Structured Cooked Chicken

|  | % |
| --- | --- |
| Cooked Chicken | 65.0 |
| Water | 34.0 |
| Fine Mesh Sodium Alginate | 0.8* |
| Encapsulated Calcium Lactate | 0.6* |

* Percentage based on weight of chicken plus water.

Following the procedure of Example 20, a structured cooked chicken product was prepared.

The gelled product can be served hot or cold as required.

**Claims**

1. A meat blend comprising comminuted meat, 0.2-2.0% by weight of a soluble alginate salt, and an encapsulated calcium salt in an amount sufficient to convert 80% of the alginate to calcium alginate gel.

2. A process for preparing structured meat products which comprises:
   a) comminuting meat to a desired size;
   b) mixing therewith for 2-6 minutes 0.2-2.0% by weight soluble alginate and encapsulated calcium salt in an amount sufficient to form a calcium alginate gel; and
   c) forming said mixed meat into a desired shape and storing said shaped meat for up to 18 hours to allow it to form a structured meat product.

3. The process of claim 2 wherein the calcium salt is encapsulated in an encapsulating material comprising one or more of a water-soluble glyceride or hydrogenated vegetable oil and its weight % ranges from 10-70%.

4. The process of claim 3 wherein the encapsulating material further comprises 0.5% to 10% (wt) of a surfactant.

5. The process of claim 3 wherein the encapsulating material comprises 60% glyceride and 40% oil.

6. A structured meat product produced by the process of Claim 2.

## Patentansprüche

1. Fleischmischung, umfassend zerkleinertes Fleisch, 0,2 - 2,0 Gew.-% eines löslichen Alginatsalzes und ein eingekapseltes Calciumsalz in einer Menge, die ausreicht, um 80 % des Alginats zu Calciumalginat-Gel umzuwandeln.

2. Verfahren zur Herstellung strukturierter Fleischprodukte, welches umfaßt:
   a) Zerkleinern des Fleisches zu einer gewünschten Größe;
   b) Vermischen damit für eine Dauer von 2 - 6 Minuten 0,2 - 2,0 Gew.-% lösliches Alginat und ein eingekapseltes Calciumsalz in einer Menge, die ausreicht, um ein Calciumalginat-Gel zu bilden; und
   c) Formen des genannten gemischten Fleisches in eine gewünschte Form und Aufbewahren des genannten geformten Fleisches bis zu 18 Stunden lang, um zu ermöglichen, daß sich ein strukturiertes Fleischprodukt bildet.

3. Verfahren nach Anspruch 2, bei dem das Calciumsalz in einen Einkapselungsmaterial eingekapselt ist, das eines oder mehrere von einem wasserlöslichen Glycerid oder hydriertem Pflanzenöl enthält und dessen Gew. -%-Bereich sich von 10 - 70 % erstreckt.

4. Verfahren nach Anspruch 3, bei dem das eingekapselte Material außerdem 0,5 % bis 10 % (Gewicht) eines oberflächenaktiven Mittels enthält.

5. Verfahren nach Anspruch 3, bei dem das Einkapselungsmaterial 60 % Glycerid und 40 % Öl enthält.

6. Strukturiertes Fleischprodukt, das gemäß dem Verfahren nach Anspruch 2 hergestellt wird.

## Revendications

1. Mélange de viandes comprenant de la viande réduite en fines dimensions, 0,2-2,0% en poids d'un sel d'alginate soluble, et un sel de calcium encapsulé en une quantité suffisante pour transformer 80% de l'alginate en gel d'alginate de calcium.

2. Procédé de préparation de produits de viande structurés dans lequel :
   a) on réduit en fines dimensions la viande jusqu'à la taille désirée ;
   b) on mélange avec elle pendant 2 à 6 minutes 0,2-2,0% en poids d'alginate soluble et un sel de calcium encapsulé en une quantité suffisante pour former un gel d'alginate de calcium ; et
   c) on façonne ladite viande mélangée en une forme désirée et on conserve ladite viande façonnée pendant une durée allant jusqu'à 18 heures pour lui permettre de former un produit de viande structuré.

3. Procédé de la revendication 2 dans lequel on encapsule le sel de calcium dans une matière d'encapsulation comprenant un ou plusieurs glycérides solubles dans l'eau ou huiles végétales hydrogénées, et son pourcentage pondéral se situe entre 10 et 70%.

4. Procédé de la revendication 3, dans lequel la matière d'encapsulation comprend en outre de 0,5% à 10% (en poids) d'un agent tensio-actif.

**5.** Procédé de la revendication 3, dans lequel la matière d'encapsulation comprend 60% de glycéride et 40% d'huile.

**6.** Produit de viande structuré préparé par le procédé de la revendication 2.